# EUROPÄISCHE PATENTSCHRIFT

(11) **EP 3 372 373 B1**
(45) Veröffentlichungstag und Bekanntmachung des Hinweises auf die Patenterteilung: **11.08.2021**
(21) Anmeldenummer: 18160365.5
(22) Anmeldetag: 06.03.2018
(51) Int. Cl.: B29C 45/00, A47G 19/22, B65D 1/26

(54) **KUNSTSTOFFGEFÄSS MIT BEHERBERGTEM METALLELEMENT UND VERFAHREN SEINER HERSTELLUNG**
PLASTIC VESSEL WITH INTEGRATED METAL ELEMENT, AND METHOD PRODUCING THE SAME
CUVE EN MATIÈRE PLASTIQUE DOTÉE DE L'ÉLÉMENT MÉTALLIQUE INTÉGRÉ ET SON PROCÉDÉ DE FABRICATION

(30) Priorität: 10.03.2017 DE 102017002306
(43) Veröffentlichungstag der Anmeldung: 12.09.2018
(73) Patentinhaber: maglassX GmbH, 94078 Freyung (DE)
(72) Erfinder: FRITZ, Christoph, 94078 Freyung (DE)
(74) Vertreter: Ridderbusch, Oliver

(56) Entgegenhaltungen:
- EP-A2- 0 143 233
- WO-A1-2016/160565
- DE-A1- 2 356 912
- DE-U1-202015 000 449
- FR-A1- 2 820 963
- GB-A- 1 083 176
- US-A- 2 217 514
- US-A1- 2004 136 177
- US-A1- 2005 087 255

## Beschreibung

Die vorliegende Erfindung betrifft ein Kunststoffgefäß mit beherbergtem Metallelement und ein Verfahren seiner Herstellung. Die vorliegende Erfindung betrifft dabei insbesondere ein Kunststoffgefäß mit einem magnetischen Metallelement zur Verwendung in Zusammenwirken mit einem Transportmittel und insbesondere zur Verwendung in einem Fahrzeug jeder Art, und/oder für Personen mit eingeschränkter Motorik und/oder Aufmerksamkeit und/oder Wahrnehmung und/oder als dekoratives Element.

Aus dem deutschen Gebrauchsmuster DE202014002819U1 ist ein Magnet- und Metallelement für Gefäße und Einrichtungselemente zum rutschfesten Aufstellen von Gefäßen in einem Fahrzeug bekannt, bei dem vorgeschlagen wird, ein Magnetelement an dem Boden eines Gefäßes anzuordnen, wobei das Magnetelement in den Boden des Gefäßes eingebettet sein kann und das Gefäß aus Kunststoff mittels Spritzguß bereitgestellt sein kann.

Beim Spritzguß von Kunststoff wie etwa Copolyester, Polypropylen und insbesondere Polycarbonat werden Temperaturen von über 300 Grad des flüssigen Kunststoffs erreicht und es kommen beim Erkalten und bei der Verfestigung des Kunststoffs die thermoplastischen Eigenschaften des Kunststoffs voll zum Tragen, dessen Volumen bei z.B. Polycarbonat um etwa 0,5 bis 0,7% Prozent schwindet. Ein Metallelement hat vergleichsweise stark abweichende Temperaturausdehnungseigenschaften, weshalb ein während des Spritzgusses bereits an seiner bestimmungsgemäßen Position insbesondere in der Nähe einer Oberfläche am Boden des Gefäßes angeordnetes vollständig von erkaltendem und erstarrendem Kunststoff umgebenes Metallelement vom Anspritzpunkt ausgehend Risse im Kunststoff verursacht, die insbesondere bei beträchtlicher Beanspruchung durch Gebrauch z.B. bei mehrmaligen Spülen eines beispielsweise als Trinkglas verwendeten Gefäßes zunehmend größer werden.

Aus diesem Grund führt ein während des Spritzgusses in ein Kunststoffgefäß eingebettetes Metallelement zu in der Umgebung des eingebetteten Metallelements fehlerhaften Ausbildungen des Gefäßes und/oder zu einer unerwünscht geringen Lebensdauer eines makroskopisch unversehrten Gefäßes.

Ein derartiges Gefäß mit unerwünschten Rissen kann daher gängigen ästhetischen Ansprüchen nicht entsprechen, denn es läßt sich insbesondere nicht mehr zufriedenstellend pflegen oder reinigen. Außerdem besteht die Gefahr, dass der das Metallelement unvollständig umgebende Kunststoff das Metallelement nicht mehr hinreichend vor Außeneinflüssen schützt, wie sie beispielsweise beim Reinigen in einer Spülmaschine auftreten, was dazu führt, dass auch das Metallelement beschädigt werden kann.

Wenn das Metallelement außerdem einen Magneten umfasst, was insbesondere für die Verwendung des Gefäßes als rutschfestes Gefäß in Zusammenwirken mit einem Transportmittel und insbesondere für die Verwendung in einem Fahrzeug wünschenswert ist, wird die magnetische Remanenz des Magneten nicht nur bei einer Temperatur in dem genannten Temperaturbereich von über 300 Grad beträchtlich entmagnetisiert sondern kann auch bereits in einem niedrigeren Temperaturbereich von z.B. 200 Grad massiv beeinträchtigt werden.

Aus der EP 0 143 233 A2 ist ein Trinkglas mit einem Behälterteil und einem als Einsatz ausgebildeten Fußteil aus Kunststoff bekannt, wobei das Fußteil für eine wünschenswerte Stabilität des Trinkglases auch in leerem oder teilgefülltem Zustand eine Einlage mit einem höheren spezifischen Gewicht als der Kunststoff aufweist. Die Einlage kann aus Metall und als Ring oder Scheibe ausgebildet sein.

Aus der FR 2 820 963 A1 ist ein Trinkglas aus Kunststoff mit einem aus ästhetischen und wirtschaftlichen Gründen wünschenswert dicken Boden und mit insbesondere einer im Vergleich zu seinem Durchmesser großen Höhe bekannt. Gegenüber der Dicke des Randes des Trinkglases beträgt die Dicke des Bodens wenigstens das 10-fache. Das Trinkglas ist zweistückig hergestellt, mit einem Hauptkörper, der in seinem Boden eine Ausnehmung aufweist, in die ein massiver Stopfen aus Kunststoff eingesetzt ist, mittels dem der massive Boden bereitgestellt wird. Der Hauptkörper und Stopfen sind mittels Schwindung des noch nicht abgekühlten Hauptkörpers miteinander verbunden.

Aus der WO2012/006428A1 ist bekannt ein Gefäß mit einem Radio-Frequenzidentifikations-Bauelement (RFID Tag) auszustatten, wobei dadurch insbesondere das optische Erscheinungsbild des Gefäßes stark verändert wird.

Es ist daher Aufgabe der vorliegenden Erfindung ein Kunststoffgefäß mit einem in der Nähe seines Bodens eingebetteten Metallelement bereitzustellen, das auch höchsten ästhetischen Ansprüchen genügt, so dass es selbst für eine Verwendung des Gefäßes als Dekorationselement geeignet ist, das eine zufriedenstellend lange Lebensdauer hat, das unempfindlich gegenüber Außeneinflüssen, wie beispielsweise Witterungseinflüssen ist, das sich bedenkenlos auch z.B. in Spülmaschinen reinigen läßt, und das ausserdem geeignet ist, ein magnetisches Metallelement ohne Beeinträchtigung seiner bestimmungsgemäßen Magnetisierung bei seiner Herstellung in der Nähe seines Bodens zu beherbergen, so dass das Gefäß für die Verwendung als rutschfestes Gefäß in Zusammenwirken mit einem Transportmittel geeignet ist und in Zusammenwirken mit geeigneten Einrichtungselementen insbesondere auch für die Verwendung in einem Fahrzeug jeder Art geeignet ist und ausserdem für die Verwendung als rutschfestes, sicher stehendes und handhabbares Gefäß für Personen mit eingeschränkter Motorik und/oder Aufmerksamkeit und/oder Wahrnehmung und/oder als dekoratives Element geeignet ist.

Hierbei ist weitere Aufgabe der vorliegenden Erfindung ein für ein vorstehend genanntes erfindungsgemäßes Kunststoffgefäß geeignetes Verfahren zur Herstellung anzugeben, das insbesondere auch für eine kostengünstige industrielle Massenproduktion geeignet ist.

Die Aufgaben der Erfindung werden mit den Merkmalen der unabhängigen Ansprüche gelöst. Vorteilhafte Ausführungen der Erfindung sind ohne Beschränkung in den Merkmalen der Unteransprüche und/oder der nachfolgenden Beschreibung aufgeführt, die von schematischen Zeichnungen begleitet ist.

Die Erfindung betrifft insbesondere vorteilhaft ein Kunststoffgefäß, das in seinem Fuß ein Metallelement beherbergt, wobei das Kunststoffgefäß zweistückig mit einem Gefäßelement und einer Abdeckung ausgebildet ist, und wobei in dem Fuß des Gefäßelements eine Ausnehmung ausgebildet ist, die von der Abdeckung derart bedeckt ist, dass ein zentraler abgeschlossener Bereich der Ausnehmung bereitgestellt ist, der das Metallelement beherbergt, und wobei das Gefäß und die Abdeckung thermoplastisch unter Druckeinsatz miteinander verbunden sind.

Erfindungsgemäß ist dabei vorteilhaft die vorstehende thermoplastische Verbindung mittels thermoplastischer Schwindung des Gefäßelements bei dessen Abkühlen und Aushärten und bei bereits vollständig erstarrter Abdeckung oder bei thermoplastischer Schwindung der Abdeckung bei deren Abkühlen und Aushärten und bei bereits vollständig erstarrtem Gefäßelement jeweils bei einem geeigneten Druck, der die Abdeckung auf das Gefäßelement presst, und bei einer geeigneten vorbestimmten Temperatur vorgesehen, wobei der Druck und insbesondere die Temperatur derart ausgewählt sind, dass bei der Verbindung von Gefäßelement und Abdeckung keine Risse in dem Kunststoff auftreten und dass die magnetischen Eigenschaften eines magnetischen Metallelements nicht beeinträchtigt werden.

Erfindungsgemäß umfasst die Ausnehmung zur Beherbergung des Metallelements eines vorstehenden erfindungsgemäßen Gefäßelements dabei insbesondere einen äußeren Rand und einen von dem äußeren Rand beabstandeten inneren Rand, der den zentralen Bereich der Ausnehmung zur Beherbergung des Metallelements umschließt, so dass zwischen dem inneren und äußeren Rand ein Bereich der Ausnehmung bereitgestellt ist, der den zentralen Bereich umgibt. Dabei umfasst die Abdeckung einen sich gegenüber einem zentralen Bereich der Abdeckung erhebenden Bogen, der den zentralen Bereich der Abdeckung umgibt, und der mit der den zentralen Bereich des Gefäßelements umgebenden Ausnehmung des Gefäßelements derart korrespondierend ausgebildet ist, dass bei Abdeckung des Bereichs zur Beherbergung des Metallelements der Bogen der Abdeckung in dem den Bereich zur Beherbergung des Metallelements umgebenden Bereich der Ausnehmung des Gefäßelements angeordnet ist.

Bei dieser Ausführung der Erfindung hat der vorstehend genannte Bogen der Abdeckung dabei einen äußeren Rand, der der äußere Rand der Abdeckung ist, und der mit dem äußeren Rand des Gefäßelements korrespondiert und benachbart zu diesem angeordnet ist, und einen inneren Rand, der mit dem inneren Rand des Gefäßelements korrespondiert und benachbart zu diesem angeordnet ist.

Erfindungsgemäß weist die Abdeckung, wie die vorstehende Abdeckung, eine im Schnitt meanderförmige vorteilhafte Struktur auf, deren Profil mit der Struktur des Fußes des Gefäßelements korrespondiert, so dass eine vorteilhaft große Kontaktfläche zwischen Gefäßelement und Abdeckung für deren stabile und dichte Verbindung bereitgestellt ist.

Ausserdem ist bei dieser bevorzugten Ausführung der Erfindung von Vorteil, die Abdeckung in bereits vollständig nachgeschwundenem, abgekühlten und ausgehärteten Zustand mit dem Gefäßelement bei dessen vorbestimmter Duktilität, Temperatur und Schwindung unter Druckbeaufschlagung zu verbinden, wobei bei der weiteren Abkühlung und Schwindung des Gefäßelements von außen nach innen auf den zentralen Bereich zur Beherbergung des Metallelements gerichtete Kräfte auf die Abdeckung wirken und dabei eine besonders zuverlässige und dichte Verbindung von Gefäßelement und Abdeckung begünstigen, und wobei ausserdem die meanderförmige Struktur geeignet ist, den genannten nach innen auf die Abdeckung wirkenden Kräften entgegen zu wirken.

Nach einer weiteren vorteilhaften Ausführung der Erfindung ist an dem äußeren Rand des Gefäßelements innenseitig eine umlaufende Wulst ausgebildet. Ausserdem ist bei dieser Ausführung der Erfindung an dem äußeren Rand der Abdeckung außenseitig eine mit der Wulst korrespondierende Abstufung derart ausgebildet, dass die Wulst mit der Abstufung verrastet ist, wodurch eine besonders enge, dichte und stabile Verbindung von Gefäßelement und Abdeckung erreicht ist.

Ausserdem ist bei dieser Ausführung der Erfindung an dem inneren Rand des Bogens der Abdeckung innenseitig eine Abstufung ausgebildet, die mit dem inneren Rand des Gefäßelements, der den Bereich zur Beherbergung des Metallelements umgibt, derart korrespondiert, dass der innere Rand innenseitig benachbart zu dem vorstehenden inneren Rand des Gefäßelements angeordnet ist und dabei ausserdem die innenseitige Abstufung auf dem inneren Rand des Gefäßelements aufliegt, wodurch vorteilhaft sichergestellt ist, dass trotz Schwindung des Gefäßelements in Richtung nach innen zu dem zentralen Bereich zur Beherbergung des Metallelements die bereits vollständig nachgeschwundene Abdeckung dennoch mit dem inneren Rand ihres Bogens in Kontakt mit dem inneren Rand des Gefäßelements bleibt, so dass auch dort eine Verbindung von Abdeckung und Gefäßelement sichergestellt ist.

Um der vorstehend beschriebenen meanderförmigen Struktur eine erhöhte Stabilität zu verleihen ist ausserdem von Vorteil zwischen dem äußeren Rand des Bogens der Abdeckung und dem inneren Rand des Bogens der Abdeckung Stege vorzusehen, die den äußeren und inneren Rand verbinden, wobei die Stege insbesondere bei axialsymmetrischer Ausbildung des Gefäßelements und/oder der Abdeckung korrespondierend zu dem Gefäßelement und/oder der Abdeckung ebenfalls axialsymmetrisch angeordnet sind.

Um auf einfache Weise ineinander stapelbare Gefäße bereitzustellen, ist das Gefäßelement geeigneter Weise als sich zum Fuß des Gefäßes hin verjüngender Konus ausgebildet, der geeigneter Weise auch im Bereich des Fußes in einen Zylinder übergehen kann. Außerdem ist dabei die Abdeckung geeigneter Weise scheibenförmig ausgebildet, wobei das Gefäßelement und die Abdeckung jeweils eine axiale Symmetrie mit identischer Symmetrieachse haben, und wobei das Metallelement geeigneter Weise entsprechend flach symmetrisch ausgebildet ist.

Bei dieser Ausführung, die sich besonders als Trinkglas eignet, sind vorteilhaft wenigstens drei vorstehend beschriebene Stege radial und ebenfalls symmetrisch zu der Achse ausgebildet. Insbesondere für die Ausführung des Gefäßes als Trinkglas ist das Gefäß geeigneter Weise insbesondere aus Copolyester wie beispielsweise Tritan (TM) von Eastman Chemical Company oder Polycarbonat ausgebildet, und somit weitestgehend kratzfest, transparent und entsprechend langlebig und ästhetisch. Das Metallelement ist ausserdem vorteilhaft ein Magnet, so dass das Gefäß in Zusammenwirken mit einem geeignetem Transportmittel und insbesondere in Zusammenwirken mit geeigneten Einrichtungselementen vorteilhaft als rutschfestes Trinkgefäß in einem Fahrzeug jeder Art und/oder als rutschfestes sicher handhabbares Gefäß für Personen mit eingeschränkter Motorik und/oder Aufmerksamkeit und/oder Wahrnehmung verwendet werden kann. Ein hierfür besonders gut geeigneter Magnet ist insbesondere als flacher scheibenförmiger Zylinder mit axialer Polung ausgebildet, der insbesondere vorteilhaft ein mit einer Kupfer-Nickel Schutzschicht versehener Neodym Magnet sein kann.

Das Gefäß kann in dem zentralen abgeschlossenen Bereich seiner Ausnehmung neben dem Metallelement außerdem ein RFID Tag beherbergen, wobei auch hierdurch der optisch ästhetische Gesamteindruck des Gefäßes nicht beeinträchtigt ist.

Wenn hier vorstehend, wie auch sonst in der Anmeldung von einem Transportmittel gesprochen wird, dann sind dabei im gesamten Kontext der Anmeldung insbesondere Transportmittel zum Transport von Trinkgefäßen in der Gastronomie und/oder bei gesellschaftlichen Veranstaltungen wie etwa geeignet ausgebildete Servierwägen, Serviertabletts, etc. gemeint, die jeweils geeignete mit einem Magneten zusammenwirkende Metallelemente umfassen und/oder mit solchen zusammenwirken.

Wenn hier vorstehend, wie auch sonst in der Anmeldung von einem Fahrzeug oder einem Fahrzeug jeder Art gesprochen wird, dann sind dabei im gesamten Kontext der Anmeldung immer sowohl Landfahrzeuge wie Straßen- oder Schienenfahrzeuge jeder Bauart als auch andere Verkehrsmittel jeder Bauart wie etwa Schiffe, Yachten, Boote, Seilbahnen, Flugzeuge, etc. eingeschlossen, die jeweils geeignet ausgebildete Einrichtungselemente umfassen.

Wenn hier vorstehend von Personen mit eingeschränkter Motorik und/oder Aufmerksamkeit und/oder Wahrnehmung gesprochen wird, dann sind dabei insbesondere Menschen gemeint, deren sichere bestimmungsgemäße Handhabung von Gefäßen mit Flüssigkeiten wie insbesondere Trinkgläsern zweifelhaft sein kann und für die daher ein rutschfestes Gefäß besonders geeignet ist, wie beispielsweise Kinder oder pflegebedürftige Menschen.

Wenn hier vorstehend, wie auch sonst in der Anmeldung von Verwendung als dekoratives Element gesprochen wird, dann ist damit im gesamten Kontext der Anmeldung insbesondere beispielsweise die Verwendung eines ein magnetisches Metallelement umfassenden Gefäßes in Zusammenwirken mit metallischen Einrichtungselementen, wie beispielsweise Wand- und Deckenelementen, Schränken, Regalen, Leuchten, etc. gemeint. Beispielsweise kann ein oder mehrere an metallischen Rahmen von Deckenbeleuchtungen haftende Gefäße optisch besonders ästhetisch mit den Lichtquellen der Leuchten zusammenwirken.

Polycarbonat oder Copolyester als verwendeter Kunststoff und Neodym als leistungsstarkes Magnetelement sind auch für die Verwendung des Gefäßes als ästhetisches Dekorationselement beispielsweise an senkrechten Wänden oder Decken und im Zusammenwirken mit Lichtquellen besonders geeignet. Hierbei kann ein ausgewähltes Gewichtsverhältnis des Magnetelements zu dem Gefäßelement aus dem vergleichsweise leichten Kunststoff insbesondere im Bereich von etwa Kunststoff/Magnet 5:1 mit entsprechendem Volumenverhältnis besonders vorteilhaft sein.

Die vorliegende Erfindung betrifft ausserdem insbesondere ein Verfahren zur Herstellung eines vorstehend beschriebenen erfindungsgemäßen Kunststoffgefäßes, bei dem in einem ersten Schritt die Abdeckung mittels Spritzguß hergestellt wird, und bei dem in einem zweiten Schritt die Abdeckung so lange gelagert wird, bis deren Schwindung abgeschlossen ist, und bei dem in einem dritten Schritt das Gefäßelement mittels Spritzguß hergestellt wird, und bei dem in einem vierten Schritt das Gefäßelement auf eine vorbestimmte Arbeitstemperatur abgekühlt wird, bei der das Gefäßelement noch eine vorbestimmte Duktilität aufweist, und bei der die Schwindung des Gefäßelements bei der Abkühlung noch nicht ganz abgeschlossen ist, und bei dem in einem fünften Schritt etwa bei der vorbestimmten Arbeitstemperatur des Gefäßelements das Gefäßelement mit dem Metallelement bestückt wird, wobei das Metallelement in dem zentralen Bereich des Gefäßelements angeordnet wird; und bei dem in einem sechsten Schritt die nachgeschwundene Abdeckung ebenfalls etwa bei der vorbestimmten Arbeitstemperatur mittels Druckausübung auf die Abdeckung während gleichzeitiger thermoplastischer Schwindung des Gefäßelements mit dem Gefäßelement verpresst wird, so dass das Gefäßelement mit der Abdeckung eine unlösbare Verbindung eingeht und das vollständige Kunststoffgefäß mit dem in seinem Fuß beherbergten Metallelement bereitgestellt ist.

Die vorstehende Ausführung des erfindungsgemäßen Verfahrens ist besonders vorteilhaft, nachdem sie insbesondere gestattet ein Metallelement auch zusammen mit einem RFID Tag ohne Auftreten von Rissen im Kunststoff vollständig in einem Kunststoffgefäß und insbesondere im Fuß eines Kunststoffgefäßes zu beherbergen.

Die vorstehende Ausführung des erfindungsgemäßen Verfahrens ist ausserdem besonders vorteilhaft, nachdem sie eine kostengünstige Massenproduktion von erfindungsgemäßen Gefäßen gestattet. Eine vorproduzierte Abdeckung ermöglicht dabei ausserdem auf einfache Weise und kostengünstig die Abdeckung etwa mit einem vorbestimmten Farbton zu versehen.

Die vorstehende Ausführung ist ausserdem besonders vorteilhaft, nachdem sie ausserdem gestattet ein Magnetelement ohne die bestimmungsgemäße Verwendung des Gefäßes mit dem Magnetelement in Zusammenwirken mit einem geeigneten Transportmittel und insbesondere als rutschfestes Trinkgefäß in einem Fahrzeug wesentlich zu beeinträchtigen vollständig im Fuß eines Kunststoffgefäßes zu beherbergen.

Bei der vorstehend beschriebenen vorteilhaften Verwendung von Copolyester oder Polycarbonat als Kunststoff für das Gefäß ist insbesondere eine vorstehende Arbeitstemperatur von etwa 120 Grad im Inneren des Kunststoffs besonders geeignet, da bei dieser Temperatur die magnetischen Eigenschaften des Magnetelements insbesondere bei Verwendung eines Neodym Magneten weitestgehend erhalten bleiben, und da ausserdem die Duktilität und weitere Schwindung von Kunststoff in diesem Temperaturbereich insbesondere in Zusammenwirken mit einer geeigneten Druckbeaufschlagung während der weiteren Abkühlung und Verfestigung eine unlösbare Verbindung des Gefäßelements mit der Abdeckung ohne unerwünschte Rissbildung im Kunststoff und damit eine Versiegelung des Metallelements, das ein Magnet sein kann, ermöglichen.

Nachdem insbesondere außerdem das Metallelement nicht mit seiner ganzen Oberfläche von der vorbestimmten Arbeitstemperatur umgeben ist und daher bei der Verbindung von Gefäßelement und Abdeckung entsprechend kaum aufgeheizt wird, kommt es nämlich zu keinem die Aushärtung des Kunststoffs störendem Einfluß aufgrund des Temperaturverhaltens des Metallelements, wobei ein magnetisches Metallelement in seiner Magnetisierung lediglich minimal beeinträchtigt wird.

Die vorstehende Ausführung ist ausserdem besonders vorteilhaft, nachdem das Gefäßelement und die Abdeckung in verschiedenen Schritten unabhängig voneinander gespritzt werden, wodurch eine separate Färbung insbesondere der Abdeckung auf einfache Weise möglich ist, was insbesondere eine kostengünstige ästhetische optische Individualisierung einzelner Gefäße aber auch verschiedener Gefäß-Serien ermöglicht. Ausserdem wird hierdurch die erfindungsgemäße Verwendung des Gefäßes als dekoratives Element begünstigt.

Dabei kann das magnetische aber auch ein nicht magnetisches Metallelement, das bei der Verwendung eines transparenten Kunststoffs wie beispielsweise vorteilhaft Copolyester oder Polycarbonat ebenfalls von außen durch den Boden oder den Fuß des Gefäßes sichtbar sein und dabei auch mit dekorativen Elementen oder Individualisierungen wie beispielsweise Namen, Logos, Daten, etc. versehen sein und eigenständig zu einem individuellen ästhetischen Gesamteindruck des Gefäßes beitragen.

Die vorstehende Ausführung ist ausserdem besonders vorteilhaft, da bei Ausnutzung der thermoplastischen Eigenschaften insbesondere des Gefäßelements bei der vorbestimmten Arbeitstemperatur im Zusammenwirken mit einer vollständig nachgeschwundenen Abdeckung die Abdeckung geeigneter Weise kleiner als das Gefäßelement ausgebildet sein kann und dabei in ihren relativen Abmessungen bezüglich den Abmessungen des Gefäßelements derart ausgebildet sein kann, dass insbesondere bei axialsymmetrischer Ausbildung von Gefäßelement und Abdeckung die Schwindung des Gefäßelements auch radial auf die Abdeckung wirkt und so mit zu einer unlösbaren Verbindung von Gefäßelement und Abdeckung beiträgt. Ausserdem wird auf diese Weise ebenfalls ein ästhetischer wünschenswerter Gesamteindruck des Kunststoffgefäßes begünstigt.

Nach einer Abwandlung der vorstehenden Ausführung kann auch das Gefäßelement vorproduziert sein und als vollständig nachgeschwundenes Gefäßelement mit einer noch nicht vollständig ausgehärteten/abgekühlten Abdeckung verpresst werden, was allerdings vergleichsweise aufwendiger und weniger zuverlässig ist, weshalb die vorstehend beschriebene erfindungsgemäße Ausführung mit der vorproduzierten Abdeckung vorteilhaft ist und daher bevorzugt wird.

Nach einer weiteren vorteilhaften Ausführung der Erfindung kann in einem weiteren Schritt des vorstehenden erfindungsgemäßen Verfahrens ausserdem nach der Verpressung des Gefäßelements mit der Abdeckung die Nahtstelle zwischen Gefäßelement und Abdeckung zusätzlich mit einem Schweißspiegel versehen sein, wodurch die Versiegelung des beherbergten Metallelements weiter verstärkt wird.

Nach einer weiteren vorteilhaften Ausführung der Erfindung wird das Gefäßelement wenigstens bei seiner Bestückung mit dem einen Magneten umfassenden Metallelement auf einem magnetischen Dorn mit seinem Fuß nach oben angeordnet, so dass bei der Bestückung des Gefäßelements mit dem Metallelement auf einfache und kostengünstige Weise insbesondere vorteilhaft eine vorbestimmte Polung eines axial gepolten Magneten vorgegeben wird, was auch eine aufwendige Sorgfalt bei der Bevorratung und Positionierung bei der Bestückung der Metallelemente erübrigt und dementsprechend kostengünstig ist.

Bei der Beherbergung außerdem eines geeigneter Weise im wesentlichen zweidimensional ausgebildeten RFID Tags zusammen mit dem Metallelement kann der RFID Tag zunächst mit dem Metallelement verbunden werden und hieran anschließend das Gefäß mit dem RFID Tag und dem Metallelement bestückt werden. Beispielsweise kann hierfür der RFID Tag auf das Metallelement geklebt sein oder auch ein metallisches Antennenelement des RFID Tags auf einem magnetischen Metallelement aufgrund dessen magnetischen Eigenschaften haften.

Nach einer weiteren vorteilhaften Ausführung der Erfindung beherbergt ein vorstehendes erfindungsgemäßes Kunststoffgefäß wie vorstehend beschrieben ein ein Magnetelement umfassendes Metallelement und wird insbesondere als Trinkgefäß in Zusammenwirken mit einem geeigneten Transportmittel und insbesondere in einem Fahrzeug jeder Art verwendet.

Nach einer weiteren vorteilhaften Ausführung der Erfindung wird ein erfindungsgemäßes Kunststoffgefäß, das ein Metallelement beherbergt und das insbesondere ein einen Magneten umfassendes Metallelement beherbergt, wie vorstehend beschrieben erfindungsgemäß insbesondere als Trinkgefäß in Zusammenwirken mit einem geeigneten Transportmittel und insbesondere in einem Fahrzeug jeder Art und/oder als dekoratives Element und/oder für die Handhabung von Personen mit eingeschränkter Motorik und/oder Wahrnehmung und/oder Aufmerksamkeit und/oder als dekoratives Element verwendet.

Zum besseren Verständnis der Erfindung werden die vorstehend genannten Ausführungen nachfolgend zusammen mit auch weiteren vorteilhaften Ausführungen anhand von schematischen begleitenden Zeichnungen detailliert beschrieben.
Hierzu zeigt:
Fig. 1a eine schematische perspektivische Darstellung eines Gefäßes nach einer Ausführung der Erfindung von schräg oben,
Fig. 1b das Gefäß von Fig. 1a von schräg unten,
Fig. 1c eine Draufsicht auf das Gefäß von Fig. 1a und b,
Fig. 1d eine Seitenansicht des Gefäßes von Fig. 1a und b,
Fig. 1e eine schematische vergrößerte perspektivische Darstellung des Metallelements des Gefäßes von Fig. 1a, b, c und d, und
Fig. 1f einen Schnitt durch das Metallelement von Fig. 1e entlang der Linie V-V von Fig. 1e;
Fig. 2a einen vergrößerten Ausschnitt A von Fig. 1d in einem Schnitt durch das Gefäß von Fig. 1d entlang der Linie V-V von Fig. 1d,
Fig. 2b den Fuß des Gefäßelements von Fig. 2a,
Fig. 2c das Metallelement von Fig. 2a, und
Fig. 2d die Abdeckung des Gefäßelements von Fig. 2a;
Fig. 3a das Gefäßelement von Fig. 2b von unten,
Fig. 3b die Abdeckung des Gefäßelements von Fig. 2d von der dem Gefäßelement abgewandten Seite,
Fig. 3c die Abdeckung des Gefäßelements von Fig. 2d von der dem Gefäßelement zugewandten Seite, und
Fig. 3d eine perspektivische Darstellung des Ausschnitts A von Fig. 1d des Gefäßes von Fig. 1d von schräg unten;
Fig. 4a eine vergrößerte Darstellung des Ausschnitts A des Gefäßelements von Fig. 2b nach einer weiteren vorteilhaften Ausführung der Erfindung,
Fig. 4b eine vergrößerte Darstellung des Ausschnitts A der Abdeckung von Fig. 2d korrespondierend mit der Ausführung von Fig. 4a,
Fig. 4c eine gemeinsame Darstellung des Ausschnitts A1 von Fig. 4a und 4b mit auf dem Gefäßelement angeordneter Abdeckung,
Fig. 4d den Ausschnitt A1 von Fig. 4c nach einer weiteren vorteilhaften Abwandlung der Erfindung, und
Fig. 4e den Ausschnitt A2 von Fig. 4a und 4b in einer gemeinsamen Darstellung mit auf dem Gefäßelement angeordneter Abdeckung;
Fig. 5a eine vorteilhafte Abwandlung der Abdeckung von Fig. 3c,
Fig. 5b die andere Seite der Abdeckung von Fig. 5a, und
Fig. 5c einen Schnitt durch die Abdeckung von Fig. 5a entlang der Linie S-S von Fig. 5a;
Fig. 6a und 6b eine schematische Darstellung eines vorteilhaften Schritts einer Ausführung des erfindungsgemäßen Verfahrens zur Herstellung der vorliegenden Erfindung, und
Fig. 6c das Gefäß von Fig. 1d ausserdem mit einem RFID Tag; und
Fig. 7 ein schematisches Flußdiagramm der wesentlichen Schritte einer Ausführung eines Verfahrens zur Herstellung eines erfindungsgemäßen Gefäßes.

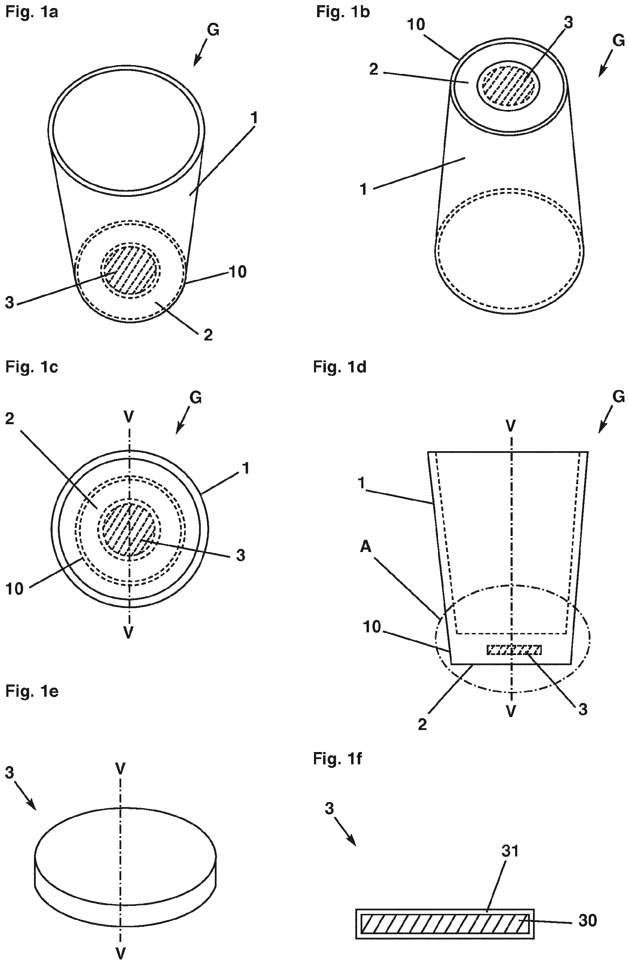

Fig. 1a zeigt eine schematische perspektivische Darstellung eines Gefäßes G nach einer Ausführung der Erfindung von schräg oben mit dem Gefäßelement 1, an dessen Fuß 10 die Abdeckung 2 angeordnet ist, wobei ein Raum zur Beherbergung des Metallelements 3 bereitgestellt ist, und Fig. 1b zeigt eine entsprechende perspektivische Darstellung des Gefäßes G von Fig. 1a von schräg unten. Fig. 1c zeigt eine schematische Draufsicht auf das Gefäß G von Fig. 1a und b und Fig. 1d eine Seitenansicht des Gefäßes G von Fig. 1a, b und c, ebenfalls jeweils mit dem Gefäßelement 1, dessen Fuß 10, der Abdeckung 2 und dem Metallelement 3, wobei insbesondere in der Darstellung von Fig. 1d der Klarheit und Übersichtlichkeit halber auf Details der Abdeckung 2 verzichtet wurde. Die Linie V-V von Fig. 1c und d kennzeichnet jeweils einen Längsschnitt durch das Zentrum des Gefäßes G, das in der Ausführung von Fig. 1 beispielhaft und vorteilhaft axialsymmetrisch mit der Linie V-V von Fig. 1d als Symmetrieachse und als sich zu dem Fuß 10 des Gefäßelements 1 hin verjüngender Konus ausgebildet ist, was für ein Gefäß G, das sich gut ineinander stapeln lässt, und das insbesondere ein Trinkgefäß sein kann, vorteilhaft ist.

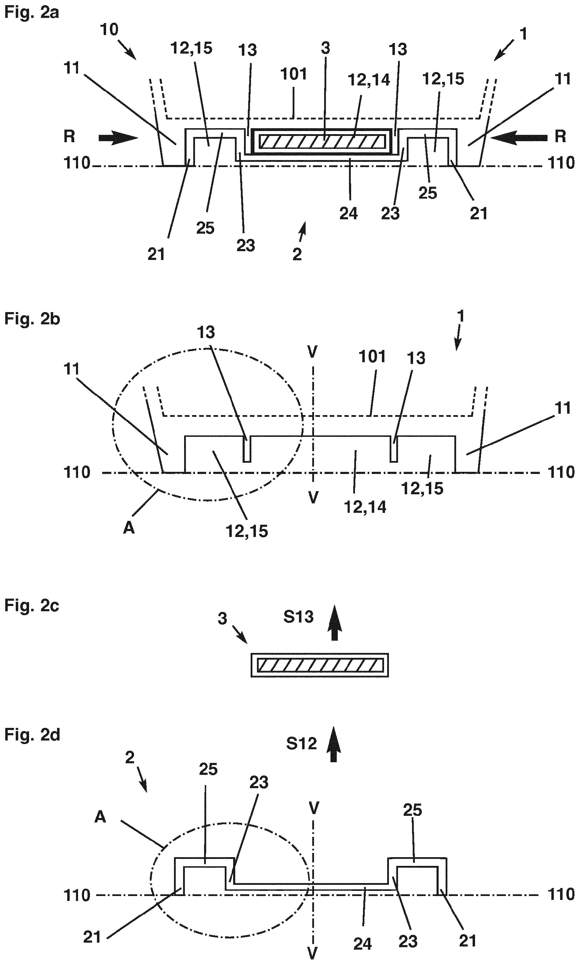

Fig. 1e zeigt eine vergrößerte perspektivische Darstellung des Metallelements 3 von Fig. 1a bis d, das geeigneter Weise flach zylindrisch scheibenförmig ausgebildet ist, wobei sein flacher Zylinder etwa einer zentralen Ausnehmung zwischen Gefäßelement 1 und Abdeckung 2 entspricht, was nachfolgend bezugnehmend auf Fig. 2 detailliert beschrieben wird. Fig. 1f zeigt einen Schnitt durch das Metallelement 3 von Fig. 1e entlang der Linie V-V von Fig. 1e, wobei das Metallelement 3 beispielhaft und vorteilhaft ein Magnetelement 30 ist, das von einer Schutzschicht 31 bedeckt ist.

Das Gefäßelement 1 und die Abdeckung 2 des Kunststoffgefäßes G von Fig. 1 sind insbesondere für die Verwendung des Gefäßes als Trinkglas und insbesondere zur Verwendung als rutschfestes Gefäß in einem Fahrzeug vorteilhaft aus Copolyester oder Polycarbonat, und somit transparent mit einer langen Lebensdauer, weshalb das Gefäß G insbesondere auch für Personen mit eingeschränkter Wahrnehmung und/oder Aufmerksamkeit und/oder Motorik geeignet ist. Das Metallelement 3 kann dabei insbesondere vorteilhaft ein Neodym Magnet 30 mit einer Kupfer-Nickel Schutzschicht sein. Copolyester oder Polycarbonat als Kunststoff und Neodym als leistungsstarker Permanentmagnet sind aber auch für die Verwendung des Gefäßes als Dekorationselement beispielsweise an senkrechten Wänden beispielsweise eines Kühlschranks und/oder in der Nähe und im Zusammenwirken mit Lichtquellen besonders geeignet. Dabei kann auch ein Gewichtsverhältnis von Kunststoff zu Magnetelement von etwa 5:1 und ein dem Gewichtsverhältnis entsprechendes Volumenverhältnis Kunststoff/Metall besonders geeignet sein, das es gestattet, das Gefäß auch umgekehrt mit seinem Fuß nach oben und seiner Öffnung nach unten beispielsweise in der Gastronomie dauerhaft aufzuhängen/zu lagern, so dass das Innere des Gefäßes vor Staub und Schmutz weitestgehend geschützt ist.

Fig. 2a zeigt den vergrößerten Ausschnitt A von Fig. 1d eines Schnitts durch das Gefäß G von Fig. 1 entlang der Linie V-V von Fig. 1d mit dem Boden 101 des Gefäßelements 1 und dem Fuß 10 des Gefäßelements 1 mit seiner Abdeckung 2 und mit seinem eingebetteten Metallelement 3.

Fig. 2b zeigt den Fuß 10 des Gefäßelements 1 von Fig. 2a, Fig. 2c zeigt das Metallelement 3 von Fig. 2a, und Fig. 2d die Abdeckung 2 des Gefäßelements 1 von Fig. 2a, wobei die Fig. 2b, c und d den Fuß 10 des Gefäßelements 1 mit dem beherbergten Metallelement 3 und mit der Abdeckung 2 in ihrer Zusammenschau als Explosionsdarstellung von Fig. 2a darstellen, und wobei ausserdem die Pfeile S13 und S12 die Richtung ihrer Zusammensetzung zu dem vollständigen Fuß 10 des Gefäßelements 1 von Fig. 2a sowie aufeinander folgende Schritte bei dem Verfahren der Herstellung eines erfindungsgemäßen Kunststoffgefäßes G anzeigen, bei dem zunächst in einem Schritt in Richtung S13 das Metallelement 3 an seiner bestimmungsgemäßen Position an dem Gefäßelement 1 positioniert wird, worauf hin in einem weiteren Schritt in Richtung S12 die Abdeckung 2 mit dem Gefäßelement 1 verbunden wird und das Magnetelement 3 dabei von dem Gefäßelement 1 und der Abdeckung 2 eingeschlossen und beherbergt ist.

Das Gefäßelement 1 von Fig. 2a und b umfasst dabei einen unteren äußeren Rand 11, der eine in seinem Fuß 10 ausgebildete untere Ausnehmung 12 umschließt. Das vorstehende Gefäßelement 1 umfasst dabei ausserdem einen von dem äußeren Rand 11 beabstandeten inneren Rand 13, der einen zentralen Bereich 14 zur Beherbergung des Metallelements 3 umgibt, wobei zwischen dem inneren Rand 13 und dem äußeren Rand 11 ein Bereich 15 der Ausnehmung 12 bereitgestellt ist, der den zentralen Bereich 14 umgibt.

Die Abdeckung 2 von Fig. 2a und 2d umfasst einen sich gegenüber ihrem zentralen Bereich 24 erhebenden Bogen 25, der den zentralen Bereich 24 umgibt, wobei der Bogen 25 mit der Ausnehmung 15 derart korrespondierend ausgebildet ist, dass bei Abdeckung des Bereichs 14 mit der Abdeckung 2 der Bogen 25 in der Ausnehmung 15 angeordnet ist, und wobei der Bogen 25 der Abdeckung 2 einen äußeren Rand 21 hat, der der äußere Rand 21 der Abdeckung 2 ist, und der mit dem äußeren Rand 11 des Gefäßelements 1 korrespondiert und benachbart zu diesem angeordnet ist. Der Bogen 25 der Abdeckung 2 hat ausserdem einen inneren Rand 23, der mit dem inneren Rand 13 des Gefäßelements 1 korrespondiert und benachbart zu diesem angeordnet ist. Die Abdeckung 2 hat somit in der Schnittdarstellung von Fig. 2a und d eine meanderartige Struktur, deren Profil mit dem Profil des Fußes 10 des Gefäßelements 1 korrespondiert. Die meanderartige Struktur ermöglicht somit durch ihre Oberfläche, die in Berührungskontakt mit der Oberfläche des Profils des Fußes 10 des Gefäßelements 1 gebracht ist, eine besonders stabile Verbindung der Abdeckung 2 mit dem Gefäßelement 1.

Die vorstehende Struktur der Abdeckung 2 und des Gefäßelements 1 ist besonders vorteilhaft für die Herstellung eines erfindungsgemäßen Kunststoffgefäßes nach einer bevorzugten Ausführung der Erfindung, bei der eine bereits vollständig nachgeschwundene Abdeckung 2 mit einem nicht vollständig ausgehärtetem Gefäßelement 1 bei einer vorbestimmten Temperatur im Inneren des Kunststoffs von für Copolyester und Polycarbonat bei etwa 120 Grad verpresst wird, wobei bei der verbleibenden Schwindung des Gefäßelements 1 das Gefäßelement 1 bei dieser Ausführung der Erfindung von außen radial in Richtung R auf die Abdeckung 2 drückt und auf diese Weise eine unlösbare Verbindung begünstigt.

Der zentrale Bereich 14 zur Beherbergung des Metallelements 3 entspricht dabei geeigneter Weise im wesentlichen dem flach zylindrisch ausgebildeten Metallelement 3 von Fig. 2a und 2c, so dass das beherbergte Metallelement 3 benachbart zu dem Boden des inneren Bereichs 14 und dem inneren Rand 13 des Gefäßelements 1 und zu dem zentralen Bereich 24 der Abdeckung angeordnet ist, und von diesen gestützt wird.

Geeigneter Weise bilden bei der Ausführung der Erfindung von Fig. 2 außerdem der Rand 11 des Gefäßelements 1 und der benachbarte Rand 21 der Abdeckung 2 etwa ein Niveau 110 auf dem ein aufgestelltes Gefäß G steht.

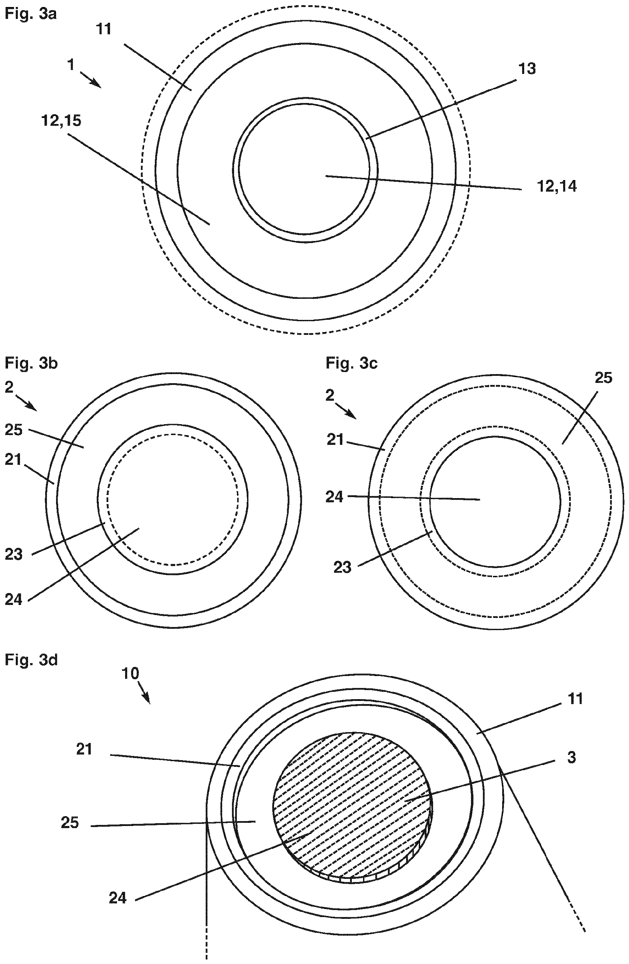

Fig. 3a zeigt eine schematische Darstellung des Gefäßelements 1 von Fig. 2a und b von unten, das heisst von der der Abdeckung 2 zugewandten Seite mit der Ausnehmung 12, dem zentralen Bereich 14 der Ausnehmung 12, dem inneren Rand 13, dem äußeren Bereich 15 der Ausnehmung 12 und dem äußeren Rand 11.

Fig. 3b und c zeigen jeweils die Abdeckung 2 des Gefäßelements 1 von Fig. 2a und d von der dem Gefäßelement 1 abgewandten Seite bzw. von der dem Gefäßelement 1 zugewandten Seite jeweils mit dem zentralen Bereich 24, dem Bogen 25, dem inneren Rand 23 des Bogens 25 und dem äußeren Rand 21 des Bogens 25, wonach die Abdeckung 2 mit der meanderförmigen Struktur nach Fig. 2a und d im wesentlichen scheibenförmig ausgebildet ist.

Fig. 3d zeigt eine vergrößerte perspektivische Darstellung des Ausschnitts A des zusammengesetzten Gefäßes G von Fig. 1d von schräg unten mit dem Fuß 10 des Gefäßelements 1, dem äußeren Rand 11 des Gefäßelements 1 und mit dem äußeren Rand 21, dem ringförmigen Bogen 25 und dem zentralen Bereich 24 der Abdeckung 2 und mit dem beherbergten Metallelement 3.

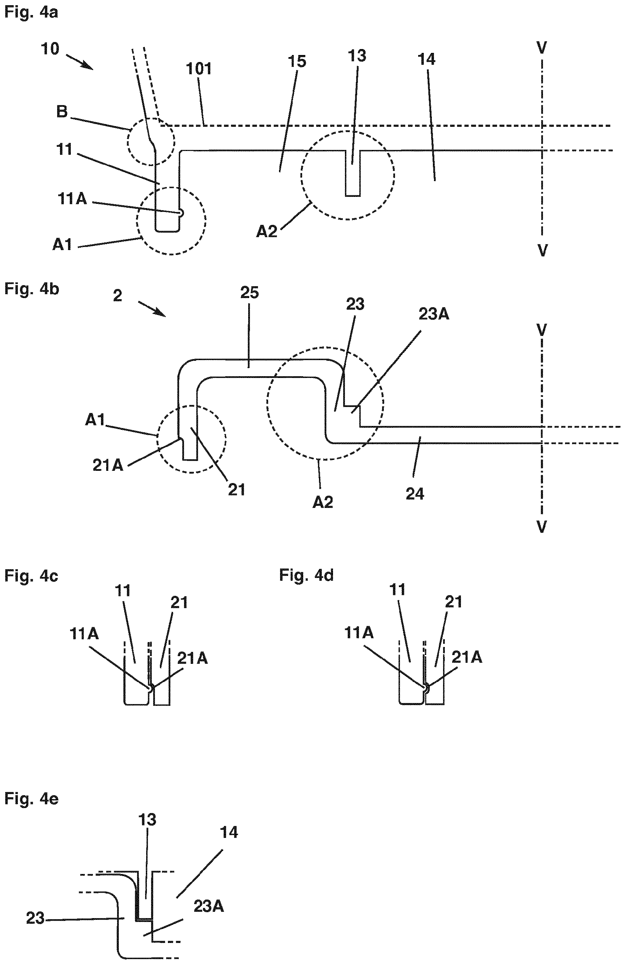

Fig. 4a zeigt eine vergrößerte Darstellung des Ausschnitts A des Fußes 10 des mit der Symmetrieachse V-V axialsymmetrischen Gefäßelements 1 von Fig. 2b nach einer weiteren vorteilhaften Ausführung der Erfindung, und Fig. 4b zeigt eine korrespondierend mit der Ausführung des Gefäßelements 1 von Fig. 4a vergrößerte Darstellung des Ausschnitts A der entsprechend abgewandelten Abdeckung 2 von Fig. 2d.

Das ebenfalls mit der Symmetrieachse V-V axialsymmetrische Gefäßelement 1 von Fig. 4a ist entsprechend dem Gefäßelement 1 von Fig. 2a und b ebenfalls als sich zu seinem Fuß 10 hin verjüngender Konus ausgebildet, der im Bereich B seines Fußes 10 in einen Zylinder übergeht. An dem äußeren Rand 11 ist im Unterschied zu der Ausführung von Fig. 2a und b außerdem innenseitig eine Wulst 11A ausgebildet, und der innenseitige Ring 13 ist gegenüber dem Ring 13 der Ausbildung von Fig. 2a und b um einen vorbestimmten Betrag erniedrigt. Ansonsten entspricht das Gefäßelement 1 von Fig. 4a dem Gefäßelement 1 von Fig. 2a und b, weshalb diesbezüglich auf die entsprechende Figurenbeschreibung verwiesen wird.

Die ebenfalls mit der Symmetrieachse V-V axialsymmetrische Abdeckung 2 von Fig. 4b ist entsprechend der Ausführung von Fig. 2a und d ebenfalls scheibenförmig mit im wesentlichen meanderförmigem Schnitt durch die Ebene, in der die Symmetrieachse V-V von Fig. 1d liegt, ausgebildet. An dem äußeren Rand 21 ist im Unterschied zu der Ausführung von Fig. 2a und d eine Abstufung 21A ausgebildet, die mit der Wulst 11A des äußeren Rands 11 der Ausführung von Fig. 4a derart korrespondiert, dass bei Anordnung der Abdeckung 2 an dem Fuß 10 des Gefäßelements von Fig. 4a die Abstufung 21A des Rands 21 mit der Wulst 11A des Rands 11 verrastet, was in der Fig. 4c dargestellt ist, die eine Zusammenschau des Abschnitts A1 der Abdeckung 2 von Fig. 4b mit dem Abschnitt A1 des Gefäßelements 1 von Fig. 4a zeigt. Fig. 4d zeigt hierzu außerdem eine Abwandlung der Ausführung der Abdeckung 2 von Fig. 4b und c, bei der die Abstufung 21A als Nut ausgebildet ist.

An dem inneren Rand 23 der Abdeckung 2 ist bei dieser Ausführung innenseitig außerdem im Unterschied zu der Ausführung von Fig. 2a und d eine Abstufung 23A ausgebildet, die mit dem inneren Rand 13 derart korrespondiert, dass bei Anordnung der Abdeckung 2 an dem Fuß 10 des Gefäßelements von Fig. 4a die Abstufung 23A auf dem Rand 13 aufliegt, was in der Fig. 4e dargestellt ist, die eine Zusammenschau des Abschnitts A2 der Abdeckung 2 von Fig. 4b mit dem Abschnitt A2 des Gefäßelements 1 von Fig. 4a zeigt.

Ansonsten entspricht die Abdeckung 2 von Fig. 4b der Abdeckung 2 von Fig. 2a und d, weshalb diesbezüglich auf die entsprechende Figurenbeschreibung verwiesen wird.

Die vorstehend anhand von Fig. 4a bis e beschriebenen Ausführungen des Gefäßelements 1 mit der Wulst 11A und dem Rand 13 mit vorbestimmter Höhe und die korrespondierend zu dem Gefäßelement 1 ausgebildete Abdeckung 2 mit der Abstufung 21A, die auch als Nut ausgebildet sein kann, und mit der Abstufung 23A, die auf dem Rand 13 aufliegt, ist besonders vorteilhaft, da sie insbesondere eine sichere, haltbare und dichte Verbindung von Abdeckung 2 und Gefäßelement 1 insbesondere bei Verbindung einer bereits nachgeschwundenen Abdeckung 2 mit einem nicht vollständig ausgehärteten Gefäßelement 1 bei einer vorbestimmten Temperatur und bei entsprechender insbesondere auch radial wirkender thermoplastischer Schwindung des Gefäßelements 1 unter Einwirkung eines äußeren insbesondere axial wirkenden Druckmittels bei der Herstellung gestattet.

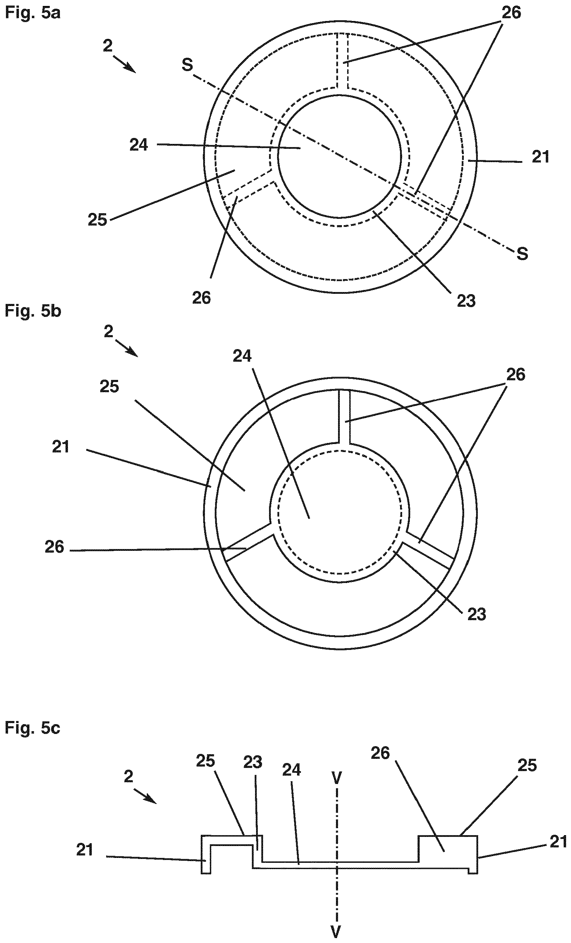

Fig. 5a zeigt eine weitere vorteilhafte Abwandlung der Abdeckung 2 von der dem Gefäßelement 1 zugewandten Seite von Fig. 3c, Fig. 5b zeigt die andere Seite der Abdeckung von Fig. 5a, und Fig. 5c einen Schnitt durch die Abdeckung von Fig. 5a entlang der Linie S-S von Fig. 5a.

Die Abdeckung 2 der Ausführung von Fig. 5 ist wie die Abdeckung 2 von Fig. 3b und c im wesentlichen scheibenförmig ausgebildet und umfasst im Unterschied zu der Abdeckung 2 von Fig. 3b und c außerdem axialsymmetrisch zu der Symmetrieachse V-V von Fig. 1d und 5c angeordnete radiale Stege 26, die den äußeren Rand 21 des Bogens 25 mit seinem inneren Rand 23 verbinden und die Abdeckung 2 insbesondere gegenüber radial von außen auf den Rand der Abdeckung 2 wirkenden Kräften bei einer thermoplastischen Schwindung eines nicht vollständig ausgehärteten Gefäßelements 1 und/oder verursacht von einem äußeren Druckmittel zur Bereitstellung eines vorbestimmten Drucks bei der Verbindung der Abdeckung 2 mit einem Gefäßelement 1 stabilisieren. Dabei sind in der Ausführung von Fig. 5a beispielsweise vorteilhaft drei trigonal angeordnete Stege 26 ausgebildet. Darüber hinaus erleichtern die Stege 26 außerdem eine exakte Positionierung der Abdeckung 2 mittels eines Bestückungswerkzeugs an ihrer vorbestimmten Position auf dem Gefäßelement 1 bei der Herstellung. Ansonsten entspricht die Abdeckung 2 von Fig. 5 der Abdeckung 2 von Fig. 2, 3 und 4, weshalb diesbezüglich auf die entsprechende Figurenbeschreibung verwiesen wird.

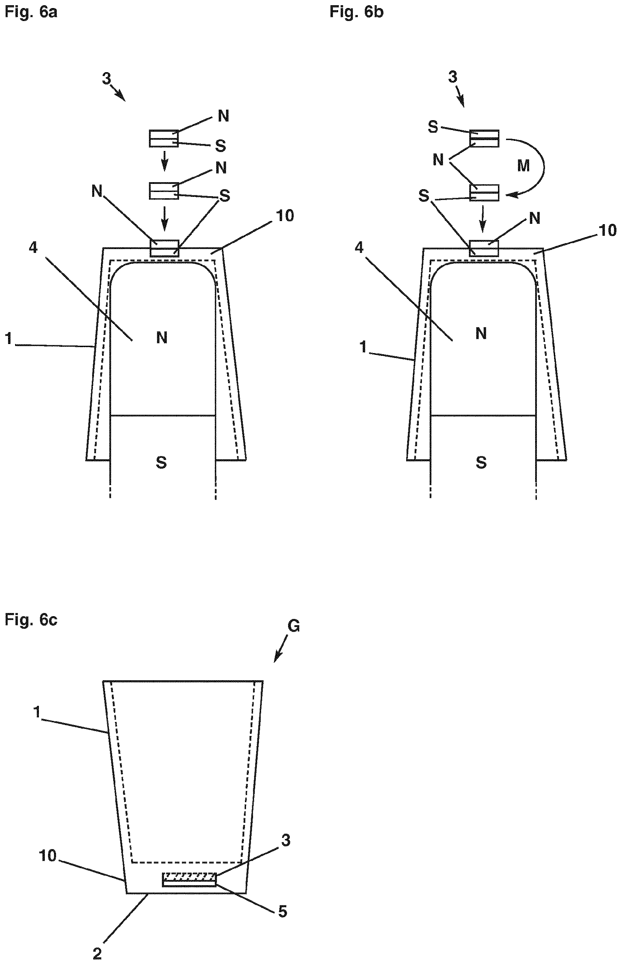

Fig. 6a und 6b zeigen eine schematische Darstellung eines vorteilhaften Schritts einer Ausführung des erfindungsgemäßen Verfahrens zur Herstellung der vorliegenden Erfindung bei der Bestückung des Gefäßelements 1 mit einem einen Magneten mit axialer Polung umfassenden Metallelement 3. Das Gefäßelement 1 ist dabei auf einem magnetischen Dorn 4 angeordnet, der geeigneter Weise ein Permanentmagnet sein kann. Der magnetische Dorn 4 ist dabei derart gepolt, dass für das Metallelement 3 bei seiner Bestückung an seiner vorbestimmten Position auf dem Fuß 10 des Gefäßelements 1 eine vorbestimmte Orientierung seiner Polung vorgegeben ist.

Fig. 6a zeigt hierzu die Bestückung des Metallelements 3 mittels einem der Übersichtlichkeit halber nicht dargestellten Bestückungswerkzeug, bei der die Polung des Metallelements 3 derart orientiert ist, dass das Metallelement 3 von dem magnetischen Dorn 4 angezogen wird.

Fig. 6b zeigt hierzu die Bestückung des Metallelements 3, bei der die Polung des Metallelements 3 umgekehrt zu der Polung des Metallelements 3 von Fig. 6a bei der Bestückung derart orientiert ist, dass von dem magnetischen Dorn 4 ein Drehmoment M auf das Metallelement 3 ausgeübt wird, wodurch das Metallelement 3 in eine Orientierung gedreht wird, die der Orientierung des Metallelements 3 von Fig. 6a entspricht, so dass das Metallelement 3 ebenfalls von dem Dorn 4 angezogen und an seiner vorbestimmten Position auf dem Fuß des Gefäßelements 1 angeordnet wird.

Die Vorsehung eines vorstehenden erfindungsgemäßen Dorns 4 bei der Bestückung des Gefäßelements 1 mit einem magnetischen Metallelement 3 ist dabei besonders vorteilhaft für die einfache und kostengünstige Herstellung von stapelbaren, magnetische Metallelemente 3 beherbergenden Gefäßen G, da eine gleiche Orientierung der Polung des Metallelements 3 sichergestellt ist.

Mittels Vorsehung eines in Fig. 6 der Einfachheit halber nicht dargestellten zweiten Dorns 4 mit einem Permanentmagneten mit umgekehrter Polung kann beispielsweise auch die Polung des magnetischen Metallelements 3 einer vorbestimmten ersten Serie von Gefäßen G vorgegeben sein, während eine vorbestimmte zweite Serie auf einfache Weise mit einem entgegengesetzt gepolten Metallelement 3 versehen werden kann. Die erste und zweite Serie können sich dabei geeigneter Weise außerdem durch die Ausbildung weiterer Unterscheidungsmerkmale wie etwa eine unterschiedliche einfache erfindungsgemäße Färbung der jeweils für eine Serie vorgefertigten Abdeckungen 2 unterscheiden.

Die Herstellung von unterschiedlichen Serien von Gefäßen G mit entgegengesetzt gepolten magnetischen Metallelementen 3 kann dabei insbesondere für die erfindungsgemäße Verwendung als Dekorationselement wünschenswert sein, nachdem derartige Gefäße auf einfache Weise paarweise an ihrem Fuß aneinanderhaftend zum Einsatz gebracht werden können. Beispielsweise können dabei zwei besonders flach etwa schalenförmig ausgebildete Gefäße G auf gegenüberliegenden Seiten etwa eines Duschvorhangs aneinander haften, oder es lassen sich derartige Gefäße unterschiedlicher Serien nicht nur einzeln sondern beispielsweise auch als zusammengesetzte Gefäße G als beispielsweise erhöhte Trinkgefäße oder Blumenvasen verwenden, bei dem jeweils ein Gefäß als vergrößerter Fuß des auf diese Weise zusammengesetzten Gefäßes dient, etc.

Für die Vorsehung eines ersten und zweiten magnetischen Dorns 4 zur einfachen Herstellung insbesondere auch verschiedener Serien von Gefäßen G mit vorbestimmter unterschiedlicher Polung ihres magnetischen Metallelements 3 kann an Stelle unterschiedlich gepolter Dorne 4 mit Permanentmagneten auch ein geeigneter Elektromagnet zur Bereitstellung einer definierten vorbestimmten Orientierung der Polung des Magnetelements 3 in lediglich einem Dorn 4 vorgesehen sein, wobei sich der Elektromagnet auf einfache Weise umpolen lässt.

Fig. 6c zeigt eine Abwandlung des Gefäßes 1 von Fig. 1d, bei dem das Gefäß 1 zusammen mit dem Metallelement 3 ausserdem ein RFID Tag 5 beherbergt, wobei der RFID Tag 5 beispielhaft benachbart unterhalb des Metallelements 3 angeordnet ist.

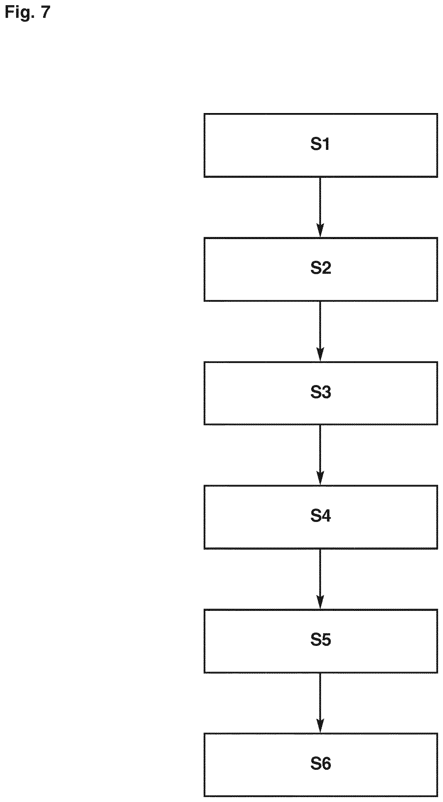

Fig. 7 zeigt ein schematisches Flußdiagramm der wesentlichen Schritte einer Ausführung eines bevorzugten Verfahrens zur Herstellung eines erfindungsgemäßen Gefäßes G, wobei in einem ersten Schritt S1 die Abdeckung 2 mittels Spritzguß hergestellt wird. Nach Ihrer Herstellung wird die Abdeckung 2 in einem zweiten Schritt S2 so lange gelagert, bis ihre Schwindung abgeschlossen ist. In einem dritten Schritt S3 wird das Gefäßelement 1 mittels Spritzguß hergestellt und dabei in einem vierten Schritt S4 auf eine vorbestimmte Arbeitstemperatur abgekühlt, bei der das Gefäßelement 1 noch eine vorbestimmte Duktilität aufweist, bei der die Schwindung des Gefäßelements 1 noch nicht ganz abgeschlossen ist.

Hieran anschließend wird in einem fünften Schritt S5 bei der vorbestimmten Arbeitstemperatur des Gefäßelements 1 das Gefäßelement 1 mit dem Metallelement 3 bestückt, wobei das Metallelement 3 in dem zentralen Bereich 14 des Gefäßelements 1 angeordnet wird. In einem weiteren sechsten Schritt S6 wird bei der vorbestimmten Arbeitstemperatur die nachgeschwundene Abdeckung 2 mit dem Gefäßelement 1 unter Druckbeaufschlagung verpresst und abgekühlt, so dass das Gefäßelement 1 mit der Abdeckung eine unlösbare Verbindung eingeht und das vollständige Kunststoffgefäß mit dem in seinem Fuß 10 beherbergten Metallelement 3 bereitgestellt ist.

Bei der Beherbergung außerdem eines RFID Tags 5 zusammen mit dem Metallelement 3 kann geeigneter Weise der RFID Tag 5 zunächst mit dem Metallelement 3 verbunden werden und hieran anschließend das Gefäß 1 mit dem RFID Tag 5 und dem Metallelement 3 in Schritt S5 bestückt werden. Beispielsweise kann hierfür der RFID Tag 5 auf das Metallelement 3 geklebt sein; oder ein metallisches Antennenelement des RFID Tags kann auf einem magnetischen Metallelement 3 aufgrund dessen magnetischen Eigenschaften haften.

Die vorliegende Erfindung wurde vorstehend unter Bezugnahme auf Fig. 1 bis 7 beispielhaft anhand eines vorteilhaft axialsymmetrisch ausgebildeten Gefäßes G mit einem konusförmigen sich zu seinem Fuß 10 hin verjüngenden Gefäßelement 1 beschrieben, wobei jedoch klar ist, dass ein erfindungsgemäßes ein Metallelement 3 beherbergendes Kunststoffgefäß auch in vielfältig anderen vorstellbaren Geometrien und Formgebungen, mit beispielsweise vier- oder sechseckigem oder ovalem Querschnitt des Gefäßelements 1 und/oder der Abdeckung 2, etc. ausgebildet und hergestellt sein kann.

Kunststoffgefäß mit beherbergtem Metallelement und Verfahren seiner Herstellung

### Bezugszeichenliste

- 1: Gefäßelement
- 10: Fuß
- 101: Boden
- 11: äußerer Rand
- 11A: innere Wulst
- 110: unteres Niveau
- 12: Ausnehmung
- 13: innerer Rand
- 14: zentraler Bereich
- 15: äußerer Bereich

- 2: Abdeckung
- 21: äußerer Rand
- 21A: Abstufung
- 23: innerer Rand
- 23A: Abstufung
- 24: zentraler Bereich
- 25: Bogen
- 26: Steg

- 3: Metallelement
- 30: Magnet
- 31: Beschichtung

- 4: Dorn

- 5: RFID Tag

## Patentansprüche

1. Kunststoffgefäß, das in seinem Fuß (10) ein Metallelement (3) beherbergt, wobei
das Kunststoffgefäß zweistückig mit einem Gefäßelement (1) und einer Abdeckung (2) ausgebildet ist, und wobei in dem Fuß (10) des Gefäßelements (1) eine Ausnehmung (12) ausgebildet ist, wobei die Ausnehmung von der Abdeckung (2) derart bedeckt ist, dass ein zentraler abgeschlossener Bereich (14) der Ausnehmung (12) bereitgestellt ist, der das Metallelement (3) beherbergt, **dadurch gekennzeichnet, dass** das Gefäßelement (1) und die Abdeckung (2) unter Druckbeaufschlagung durch thermoplastische Schwindung des Gefäßelements (1) bei ausgehärteter Abdeckung (2) oder durch thermoplastische Schwindung der Abdeckung (2) bei ausgehärtetem Gefäßelement (1) thermoplastisch miteinander verbunden sind, wobei die Abdeckung (2) eine im Schnitt meanderförmige Struktur aufweist, deren Profil mit der Struktur des Fußes (10) des Gefäßelements (1) korrespondiert, und wobei
das Gefäßelement (1) einen unteren äußeren Rand (11) umfasst, der die Ausnehmung (12) umschließt und einen von dem äußeren Rand (11) beabstandeten inneren Rand (13) umfasst, der den zentralen Bereich (14) umgibt, wobei zwischen dem inneren (13) und äußeren Rand (11) ein Bereich (15) der Ausnehmung (12) bereitgestellt ist, der den zentralen Bereich (14) umgibt, und wobei die Abdeckung (2) einen sich gegenüber einem zentralen Bereich (24) der Abdeckung (2) erhebenden Bogen (25) umfasst, der den zentralen Bereich (24) umgibt, und wobei der Bogen (25) mit der Ausnehmung (15) derart korrespondierend ausgebildet ist, dass bei Abdeckung des Bereichs (14) mit der Abdeckung (2) der Bogen (25) in der Ausnehmung (15) angeordnet ist.

2. Kunststoffgefäß nach Anspruch 1, wobei
der Bogen (25) der Abdeckung (2) einen äußeren Rand (21) hat, der der äußere Rand (21) der Abdeckung (2) ist,
und der mit dem äußeren Rand (11) des Gefäßelements (1) korrespondiert und benachbart zu diesem angeordnet ist, und der Bogen (25) der Abdeckung (2) einen inneren Rand (23) hat, der mit dem inneren Rand (13) des Gefäßelements (1) korrespondiert und benachbart zu diesem angeordnet ist.

3. Kunststoffgefäß nach Anspruch 2, wobei
an dem äußeren Rand (11) des Gefäßelements (1) innenseitig eine umlaufende Wulst (11A) ausgebildet ist, und wobei an dem äußeren Rand (21) der Abdeckung (2) außenseitig eine mit der Wulst (11A) korrespondierende Abstufung (21A) ausgebildet ist, und wobei
die Wulst (11A) mit der Abstufung (21A) verrastet ist, und wobei
an dem inneren Rand (23) des Bogens (25) eine Abstufung (23A) ausgebildet ist, die mit dem inneren Rand (13) des Gefäßelements (1) derart korrespondiert, dass der innere Rand (23) benachbart zu dem inneren Rand (13) angeordnet ist und dabei ausserdem die Abstufung (23A) auf dem inneren Rand (13) aufliegt.

4. Kunststoffgefäß nach einem der Ansprüche 2 oder 3, wobei das Gefäßelement (1) als sich zum Fuß (10) des Gefäßes hin verjüngender Konus ausgebildet ist, der im Bereich des Fußes (10) in einen Zylinder übergeht, und wobei
der äußere Rand (21) der Abdeckung (2) mit dem inneren Rand (23) des Bogens (25) der Abdeckung (2) durch wenigstens drei symmetrisch zueinander angeordnete radiale Stege (26) verbunden ist.

5. Kunststoffgefäß nach einem der vorstehenden Ansprüche 1 bis 4, wobei:
das Kunststoffgefäß ist ein Trinkglas aus Polycarbonat oder Copolyester, und
das Metallelement (3) ist ein Neodym Magnet mit einer Kupfer-Nickel Beschichtung.

6. Kunststoffgefäß nach einem der vorstehenden Ansprüche 1 bis 5, wobei:
der zentrale abgeschlossene Bereich (14) der Ausnehmung (12) beherbergt neben dem Metallelement (3) außerdem ein RFID Tag (5) .

7. Verfahren zur Herstellung des Kunststoffgefäßes nach einem der Ansprüche 1 bis 6, mit den Schritten:
- in einem ersten Schritt (S1) wird die Abdeckung (2) mittels Spritzguß hergestellt;
- Lagerung der Abdeckung (2) in einem zweiten Schritt (S2) so lange, bis deren Schwindung abgeschlossen ist;
- in einem dritten Schritt (S3) wird das Gefäßelement (1) mittels Spritzguß hergestellt;
- in einem vierten Schritt (S4) wird das Gefäßelement (1) auf eine vorbestimmte Arbeitstemperatur abgekühlt, bei der das Gefäßelement (1) noch eine vorbestimmte Duktilität aufweist, und bei der die Schwindung des Gefäßelements (1) noch nicht ganz abgeschlossen ist;
- in einem fünften Schritt (S5) wird bei der vorbestimmten Arbeitstemperatur des Gefäßelements (1) das Gefäßelement (1) mit dem Metallelement (3) bestückt, wobei das Metallelement (3) in dem zentralen Bereich (14) des Gefäßelements (1) angeordnet wird; und
- in einem sechsten Schritt (S6) wird bei der vorbestimmten Arbeitstemperatur die nachgeschwundene Abdeckung (2) mit dem Gefäßelement (1) unter Druckbeaufschlagung verpresst und abgekühlt, so dass das Gefäßelement (1) mit der Abdeckung eine unlösbare Verbindung eingeht und das vollständige Kunststoffgefäß mit dem in seinem Fuß (10) beherbergten Metallelement (3) bereitgestellt ist.

8. Verfahren zur Herstellung des Kunststoffgefäßes nach einem der Ansprüche 1 bis 6, mit den Schritten:
- in einem ersten Schritt (S1) wird das Gefäßelement (1) mittels Spritzguß hergestellt;
- Lagerung des Gefäßelements (1) in einem zweiten Schritt (S2) so lange, bis dessen Schwindung abgeschlossen ist;
- in einem dritten Schritt (S3) wird die Abdeckung (2) mittels Spritzguß hergestellt;
- in einem vierten Schritt (S4) wird die Abdeckung (2) auf eine vorbestimmte Arbeitstemperatur abgekühlt, bei der die Abdeckung (2) noch eine vorbestimmte Duktilität aufweist, und bei der die Schwindung der Abdeckung (2) noch nicht ganz abgeschlossen ist;
- in einem fünften Schritt (S5) wird das Gefäßelement (1) mit dem Metallelement (3) bestückt, wobei das Metallelement (3) in dem zentralen Bereich (14) des Gefäßelements (1) angeordnet wird; und
- in einem sechsten Schritt (S6) wird die Abdeckung (2) bei ihrer vorbestimmten Arbeitstemperatur mit dem Gefäßelement (1) unter Druckbeaufschlagung verpresst und abgekühlt, so dass das Gefäßelement (1) mit der Abdeckung (2) eine unlösbare Verbindung eingeht und ein vollständiges Kunststoffgefäß mit einem in seinem Fuß (10) beherbergten Metallelement (3) bereitgestellt ist.

9. Verfahren nach Anspruch 7 oder 8 mit einer vorbestimmten Arbeitstemperatur von etwa 120 Grad und mit Polycarbonat oder Copolyester als verwendetem Kunststoff.

10. Verfahren nach einem der Ansprüche 7 bis 9 ausserdem mit einem weiteren Schritt nach der Verpressung von Gefäßelement (1) und Abdeckung (2), in dem die Nahtstelle zwischen Gefäßelement (1) und Abdeckung (2) außerdem mit einem Schweißspiegel versehen wird.

11. Verfahren nach einem der Ansprüche 7 bis 10, wobei das Gefäßelement (1) wenigstens bei der Bestückung mit einem einen Magneten (30) umfassenden Metallelement (3) auf einem magnetischen Dorn (4) mit seinem Fuß nach oben angeordnet ist, so dass in dem fünften Schritt bei der Bestückung des Gefäßelements (1) mit dem Metallelement (3) eine vorbestimmte Polung eines axial gepolten Magneten (30) vorgegeben wird.

12. Verwendung eines Kunststoffgefäßes mit einem einen Magneten (30) umfassenden Metallelement (3) nach einem der Ansprüche 1 bis 6 als Trinkgefäß in Zusammenwirken mit einem Transportmittel und/oder in einem Fahrzeug jeder Art und/oder für die Handhabung von Personen mit eingeschränkter Motorik und/oder Wahrnehmung und/oder Aufmerksamkeit und/oder als dekoratives Element.

## Claims

1. Plastic vessel comprising a metal element (3) which is accommodated in its base (10), wherein
the plastic vessel comprises a vessel element (1) and a cover (2) such that the plastic vessel is formed in two pieces, and wherein
a recess (12) is formed in the base (10) of the vessel element (1), wherein
said recess being enclosed by the cover (2) such that a central closed region (14) of the recess (12) is provided, which accommodates the metal element (3),
**characterized in that**
the vessel element (1) and the cover (2) are connected to one another thermoplastically under pressure
by means of thermoplastic shrinkage of the vessel element (1) whereby the cover (2) has already been solidified, or by means of thermoplastic shrinkage of the cover (2) whereby the vessel element (1) has already been solidified, wherein
the cover (2) has a meandering structure in the sectional view, the profile of which corresponding to the profile of the base (10) of the vessel element (1), and wherein
the vessel element (1) comprises a lower outer edge (11), which surrounds the recess (12) and comprises an inner edge (13) which is spaced apart from the outer edge (11) and surrounds the central region (14), wherein
a region (15) of the recess (12) is provided between the inner (13) and the outer edge (11), which surrounds the central region (14), and wherein the cover (2) comprises an arc (25) which rises relative to a central region (24) of the cover (2) and surrounds the central region (24), and wherein
the arc (25) is formed corresponding to the recess (15) such that, when the cover (2) is arranged to cover the region (14) the arc (25) being disposed in the recess (15).

2. Plastic vessel according to claim 1, wherein
the arc (25) of the cover (2) has an outer edge (21),
which is the outer edge (21) of the cover (2),
and which corresponds to the outer edge (11) of the vessel element (1) and which is arranged adjacent thereto, and
the arc (25) of the cover (2) has an inner edge (23) which corresponds to the inner edge (13) of the vessel element (1) and which is arranged adjacent to said inner edge (13).

3. Plastic vessel according to claim 2, wherein
a circumferential ridge (11A) is formed on the inner side of the outer edge (11) of the vessel element (1), and wherein
a step (21A) corresponding to the ridge (11A) is formed on the outer side of the outer edge (21) of the cover (2), and wherein
the ridge (11A) is latched to the step (21A), and wherein
a step (23A) is formed on the inner edge (23) of the arc (25), the step (23A) corresponding to the inner edge (13) of the vessel element (1) such that
the inner edge (23) is arranged adjacent to the inner edge (13) and, whereby the step (23A) rests on the inner edge (13).

4. Plastic vessel according to claims 2 or 3, wherein
the vessel element (1) is designed as a cone tapering towards the base (10) of the vessel, which turns into a cylinder in the region of the base (10), and wherein
the outer edge (21) of the cover (2) is connected to the inner edge (23) of the arc (25) of the cover (2) by at least three radial fixed links (26) which are arranged symmetrical to one another.

5. Plastic vessel according to one of the preceding claims 1 to 4, wherein:
the plastic vessel is a drinking glass made of polycarbonate or copolyester, and
the metal element (3) is a neodymium magnet having a copper-nickel coating.

6. Plastic vessel according to one of the preceding claims 1 to 5, wherein:
in addition to the metal element (3), the central closed region (14) of the recess (12) further accommodates an RFID tag (5).

7. Method for producing a plastic vessel according to one of the preceding claims 1 to 6, comprising the steps:
- in a first step (S1), the cover (2) is produced by means of injection molding;
- the cover (2) is supported in a second step (S2) until the shrinkage thereof is completed;
- in a third step (S3), the vessel element (1) is produced by means of injection molding;
- in a fourth step (S4), the vessel element (1) is cooled down to a predetermined working temperature, in which the vessel element (1) still has a predetermined ductility, and in which the shrinkage of the vessel element (1) is not yet completely terminated;
- in a fifth step (S5), at the predetermined working temperature of the vessel element (1), the metal element (3) is fitted on the vessel element (1), wherein the metal element (3) is arranged in the central region (14) of the vessel element (1); and
- in a sixth step (S6), at the predetermined working temperature, the completely shrinked cover (2) is connected to the vessel element (1) under the action of pressure and cooled down, so that the vessel element (1) forms a permanent connection with the cover and the complete plastic vessel is provided, which comprises the metal element (3), which is accommodated in its base (10).

8. Method for producing a plastic vessel according to one of claims 1 to 6, comprising the steps:
- in a first step (S1), the vessel element (1) is produced by means of injection molding;
- the vessel element (1) is supported in a second step (S2) until the shrinkage thereof is completed;
- in a third step (S3), the cover (2) is produced by means of injection molding;
- in a fourth step (S4), the cover (2) is cooled down to a predetermined working temperature, in which the cover (2) still has a predetermined ductility, and in which the shrinkage of the cover (2) is not yet completely terminated;
- in a fifth step (S5) the metal element (3) is fitted on the vessel element (1), wherein the metal element (3) is arranged in the central region (14) of the vessel element (1); and
- in a sixth step (S6), at the predetermined working temperature, the cover (2) is connected to the vessel element (1) under the action of pressure and cooled down, so that the vessel element (1) forms a permanent connection with the cover (2) and a complete plastic vessel is provided, which comprises the metal element (3), which is accommodated in its base (10).

9. Method according to claim 7 or 8 with a predetermined working temperature of about 120 degrees (Celsius) and with polycarbonate or copolyester for the plastic used.

10. Method according to claims 7 to 9 comprising a further step after the connection of the vessel element (1) and the cover (2) under the action of pressure, wherein the contact line between the vessel element (1) and the cover (2) is further provided with a weld seam.

11. Method according to claims 7 to 10, wherein at least during the fitting of the metal element (3) comprising a magnet (30) on the vessel element (1), the vessel element (1) being arranged on a magnetic mandrel (4) providing an upturned base, so that in the fifth step, when the metal element (3) is fitted on the vessel element (1) a predetermined polarity of an axially poled magnet (30) is defined.

12. Use of the plastic vessel with a metal element (3) comprising a magnet (30) according to one of claims 1 to 6 as a drinking vessel in interaction with a means of transport and/or in a vehicle of any kind and/or for the usage by persons with reduced motor skills and/or perception and/or attention and/or as a decorative element.

## Revendications

1. Récipient en plastique logeant dans sa base (10) un élément métallique (3), tandis que
le récipient en plastique est formé en deux parties avec un élément de récipient (1) et un couvercle (2), et tandis que un évidement (12) est formé dans la base (10) de l'élément de récipient,
tandis que l'évidement est recouvert par le couvercle (2) de telle sorte qu'une partie centrale fermée (14) de l'évidement (12) est prévue, laquelle loge l'élément métallique (3), et **caractérisé en ce que**
l'élément de récipient (1) et le couvercle (2) sont liés thermoplastiquement l'un à l'autre sous pression par retrait thermoplastique de l'élément de récipient (1), lorsque le couvercle (2) est durci, ou par
retrait thermoplastique du couvercle (2), lorsque l'élément de récipient (1) est durci, tandis que
en coupe, le couvercle (2) a une structure de forme sinueuse, dont le profil correspond à la structure de la base (10) de l'élément de récipient (1), et tandis que
l'élément de récipient (1) comprend un bord extérieur (11) inférieur entourant l'évidement (12) et un bord intérieur (13) espacé du bord extérieur (11) et entourant la partie centrale (14), tandis qu'une partie (15) de l'évidement (12) entourant la partie centrale (14) est prévue entre les bords intérieur (13) et extérieur (11), et tandis que le couvercle (2) comprend un arc (25) s'élevant face à une partie centrale (24) du couvercle (2) et entourant la partie centrale (24), et tandis que l'arc (25) est formé pour correspondre à l'évidement (15) de telle sorte que lorsque la partie (14) est recouverte par le couvercle (2), l'arc (25) est disposé dans l'évidement (15).

2. Récipient en plastique selon la revendication 1,
tandis que l'arc (25) du couvercle (2) présente un bord extérieur (21), qui est le bord extérieur (21) du couvercle (2),
et qui correspond et est disposé de manière adjacente au bord extérieur (11) de l'élément de récipient (1), et l'arc (25) du couvercle (2) a un bord intérieur (23) qui correspond et est disposé de manière adjacente au bord intérieur (13) de l'élément de récipient (1).

3. Récipient en plastique selon la revendication 2, tandis que
un bourrelet circonférentiel (11A) est formé sur l'intérieur du bord extérieur (11) de l'élément de récipient (1), et tandis que
une partie en escalier (21A) correspondant au bourrelet (11A) est formée sur l'extérieur du bord extérieur (21) du couvercle (2), et tandis que
le bourrelet (11A) est verrouillé avec la partie en escalier (21A), et tandis que
une partie en escalier (23A) est formée sur le bord intérieur (23) de l'arc (25), laquelle correspond au bord intérieur (13) de l'élément de récipient (1), de telle sorte que le bord intérieur (23) est disposé de manière adjacente au bord intérieur (13), et qu'en outre la partie en escalier (23A) repose sur le bord intérieur (13).

4. Récipient en plastique selon une des revendications 2 ou 3, tandis que l'élément de récipient (1) est conçu comme un cône se rétrécissant vers la base (10) du récipient, lequel cône se transforme en un cylindre dans la zone de la base (10), et tandis que le bord extérieur (21) du couvercle (2) est relié au bord intérieur (23) de l'arc (25) du couvercle (2) par au moins trois nervures radiales (26) disposées symétriquement les unes par rapport aux autres.

5. Récipient en plastique selon une des revendications précédentes 1 à 4, tandis que
le récipient en plastique est un verre à boire en polycarbonate ou en copolyester, et
l'élément métallique (3) est un aimant en néodyme avec un revêtement en cuivre-nickel.

6. Récipient en plastique selon une des revendications précédentes 1 à 5, tandis que
la partie centrale fermée (14) de l'évidement (12) loge, en plus de l'élément métallique (3), également une radio-étiquette RFID (5).

7. Procédé de fabrication du récipient en plastique selon une des revendications 1 à 6, comprenant les étapes suivantes :
- lors d'une première étape (S1), le couvercle (2) est fabriqué par le biais d'un moulage par injection ;
- lors d'une deuxième étape (S2), le couvercle (2) est stocké jusqu'à ce que son retrait soit terminé ;
- lors d'une troisième étape (S3), l'élément de récipient (1) est fabriqué par le biais d'un moulage par injection ;
- lors d'une quatrième étape (S4), l'élément de récipient (1) est refroidi pour atteindre une température de travail prédéterminée à laquelle l'élément de récipient (1) présente encore une ductilité prédéterminée et à laquelle le retrait de l'élément de récipient (1) n'est pas encore complètement achevé ;
- lors d'une cinquième étape (S5), à la température de travail prédéterminée de l'élément de récipient (1), l'élément de récipient (1) est équipé de l'élément métallique (3), l'élément métallique (3) étant disposé dans la partie centrale (14) de l'élément de récipient (1) ; et
- lors d'une sixième étape (S6), à la température de travail prédéterminée, le couvercle (2) post-rétracté est pressé et refroidi avec l'élément de récipient (1) sous pression, de sorte que l'élément de récipient (1) forme une liaison inséparable avec le couvercle et que le récipient en plastique complet soit pourvu de l'élément métallique (3) logé dans sa base (10).

8. Procédé de fabrication du récipient en plastique selon une des revendications 1 à 6, comprenant les étapes suivantes :
- lors d'une première étape (S1), l'élément de récipient (1) est fabriqué par le biais d'un moulage par injection ;
- lors d'une deuxième étape (S2), l'élément de récipient (1) est stocké jusqu'à ce que son retrait soit achevé ;
- lors d'une troisième étape (S3), le couvercle (2) est fabriqué par le biais d'un moulage par injection ;
- lors d'une quatrième étape (S4), le couvercle (2) est refroidi pour atteindre une température de travail prédéterminée à laquelle le couvercle (2) présente encore une ductilité prédéterminée et à laquelle le retrait du couvercle (2) n'est pas encore complètement achevé ;
- lors d'une cinquième étape (S5), l'élément de récipient (1) est équipé de l'élément métallique (3), l'élément métallique (3) étant disposé dans la partie centrale (14) de l'élément de récipient (1) ; et
- lors d'une sixième étape (S6), le couvercle (2) est ajusté par pression sur l'élément de récipient (1) à sa température de travail prédéterminée et refroidi de sorte que l'élément de récipient (1) forme une liaison inséparable avec le couvercle (2) et qu'un récipient en plastique complet soit fourni avec un élément métallique (3) logé dans sa base (10).

9. Procédé selon la revendication 7 ou 8, ayant une température de travail prédéterminée d'environ 120 degrés et ayant du polycarbonate ou du copolyester comme plastique utilisé.

10. Procédé selon une des revendications 7 à 9, comprenant en outre une étape supplémentaire après la compression de l'élément de récipient (1) et du couvercle (2), dans lequel la jointure entre l'élément de récipient (1) et le couvercle (2) est également pourvue d'un miroir de soudage.

11. Procédé selon une des revendications 7 à 10, tandis que l'élément de récipient (1) est disposé sur un mandrin magnétique (4) avec sa base tournée vers le haut au moins lorsque l'élément de récipient (1) est équipé d'un élément métallique (3) comprenant un aimant (30), de sorte qu'une polarité prédéterminée d'un aimant (30) polarisé axialement est prédéterminée lors de la cinquième étape, lorsque l'élément de récipient (1) est équipé de l'élément métallique (3) .

12. Utilisation d'un récipient en plastique avec un élément métallique (3) comprenant un aimant (30) selon une des revendications 1 à 6 comme récipient à boire en interaction avec un moyen de transport et/ou dans un véhicule quelconque et/ou pour la prise en charge de personnes à motricité et/ou perception et/ou attention réduites et/ou comme élément décoratif.
